# EUROPÄISCHE PATENTSCHRIFT

(11) **EP 2 792 508 B1**
(45) Veröffentlichungstag und Bekanntmachung des Hinweises auf die Patenterteilung: **04.05.2016**
(21) Anmeldenummer: 14163322.2
(22) Anmeldetag: 03.04.2014
(51) Int. Cl.: B60C 23/00, B60T 17/04

(54) **Reifenfüllvorrichtung**
Tyre filling device
Dispositif de gonflage de pneumatique

(30) Priorität: 16.04.2013 DE 102013206767
(43) Veröffentlichungstag der Anmeldung: 22.10.2014
(73) Patentinhaber: Deere & Company, Moline, IL 61265 (US)
(72) Erfinder: Kneer, Bernd, 68519 Viernheim (DE)
(74) Vertreter: John Deere GmbH & Co. KG

(56) Entgegenhaltungen:
- EP-A1- 2 532 561
- EP-A2- 2 340 974
- JP-B2- 3 069 928

## Beschreibung

Die Erfindung betrifft eine Reifenfüllvorrichtung für eine landwirtschaftliche Arbeitsmaschine, mit einer von einer pneumatischen Bremsanlage umfassten Lufttrocknungseinheit, die mittels kompressorerzeugter Druckluft betreibbar ist und einem Reifenfüllanschluss zur Zuleitung von Druckluft zu einem Reifen der Arbeitsmaschine.

Ein Reifenfüllanschluss bei einer pneumatischen Bremsanlage mit Lufttrocknungseinheit wird herkömmlich nach der Funktionseinheit Druckregler-Lufttrockner angeschlossen. Das hat zur Folge, dass bei dieser Konfiguration getrocknete Luft zum Füllen eines Reifens zur Verfügung steht. Bei einer landwirtschaftlichen Arbeitsmaschine, beispielsweise einem Traktor, ist der Luftbedarf zum Füllen eines Reifens mehrfach höher als beispielsweise der eines Lastkraftwagen, der zudem regelmäßig eine leistungsstärkere Druckluftbeschaffungsanlage aufweist. Daher besteht bei einem Traktor die nicht unerhebliche Gefahr, dass die pneumatische Bremsanlage durch Benutzen des Reifenfüllanschlusses Feuchtigkeit zieht beziehungsweise nass wird, weil die Trocknungskapazität der Lufttrocknungseinheit ohne entsprechende Regeneration während eines langen Füllvorganges eines Reifens aufgezehrt wird. Zum Füllen des Reifen ist nicht getrocknete Druckluft genauso gut geeignet wie trockene, da prinzipiell nicht die Gefahr des Einfrierens oder der Korrosion besteht.

Reifenfüllvorrichtungen in Kombination mit pneumatischen Bremsanlagen zeigen die Schriften JP 3069928 B2 und EP 2340974 A2.

Ausgehend hiervon ist die Aufgabe der vorliegenden Erfindung eine Reifenfüllvorrichtung bereitzustellen, die den vorgenannten Aspekten Rechnung trägt.

Die Aufgabe wird gelöst durch eine Reifenfüllvorrichtung für eine landwirtschaftliche Arbeitsmaschine, mit einer von einer pneumatischen Bremsanlage umfassten Lufttrocknungseinheit, die mittels kompressorerzeugter Druckluft betreibbar ist, wobei in einer druckführenden Kompressorleitung vor der Lufttrocknungseinheit ein Reifenfüllanschluss zur Zuleitung von Druckluft zu einem Reifen der Arbeitsmaschine vorgesehen ist.

Die Gefahr, dass bei einer landwirtschaftlichen Arbeitsmaschine in Form eines Traktors die pneumatische Bremsanlage durch Benutzen des Reifenfüllanschlusses Feuchtigkeit zieht beziehungsweise nass wird, weil die Trocknungskapazität der Lufttrocknungseinheit ohne entsprechende Regeneration während des Füllvorganges aufgezehrt ist, wird erfindungsgemäß vermieden. Insbesondere beim Traktor wird trotz häufiger Benutzung des Reifenfüllanschlusses in Verbindung mit beziehungsweise anstelle einer Reifendruckregelanlage die erforderliche Funktion der Trocknung von Druckluft für die pneumatische Bremsanlage sichergestellt. Ein automatisches System, das nicht getrocknete Reifenluft zur Verfügung, stellt einen Sicherheitsgewinn dar. Es ist ferner energiesparend, da getrocknete Luft auch das Fördern von Regenerationsluft für den Trockner erfordert. Geförderte Regenerationsluft stellt einen Energieverlust dar. Erfindungsgemäß ist vorgesehen, dass der Reifenfüllanschluss bezogen auf eine durch den Druckluftkompressor vorgegebene Förderrichtung vor der Lufttrocknungseinheit angeordnet beziehungsweise vorgesehen ist. Hierdurch wird dem Reifenfüllanschluss nicht getrocknete Druckluft zur Verfügung gestellt, da diese, bevor sie die Lufttrocknungseinheit durchströmt, abgezweigt werden kann.

Bevorzugt umfasst die Lufttrocknungseinheit einen in eine Arbeitsstellung schaltbaren Druckregler, wobei in der Arbeitsstellung eine Bereitstellung von Druckluft über die Kompressorleitung durch einen Kompressor erfolgt. Durch diese Aktivierung des Druckreglers wird gewährleistet, dass in der druckführenden Kompressorleitung ein Druck aufgebaut werden kann.

Ferner ist bevorzugt, dass der Druckregler in Abhängigkeit eines Druckzustandes in der pneumatischen Bremsanlage in die Arbeitsstellung schaltet. Hierdurch ergibt sich die Möglichkeit, aufgrund eines Zustandskriteriums in der pneumatischen Bremsanlage eine Reifenfüllung zu aktivieren.

Bevorzugt speist sich der Druckzustand zur Schaltung des Druckreglers in die Arbeitsstellung aus einem Druckspeicher der pneumatischen Bremsanlage. Hierdurch wird ein konstantes Zustandskriterium für eine Aktivierung einer Reifenfüllung bereitgestellt.

Bevorzugt ist ein Wechselventil vorgesehen, das in Abhängigkeit eines Verhältniss der Druckzustände in der druckführenden Kompressorleitung und in der pneumatischen Bremsanlage schaltbar ist. Das Wechselventil stellt somit ein schaltbares Element zwischen der pneumatischen Bremsanlage und dem kompressorseitigen Eingang des Druckreglers dar.

Insbesondere ist bevorzugt, dass das Wechselventil zwischen der druckführenden Kompressorleitung und dem Reifenfüllanschluss angeordnet ist und über eine Vorsteuerdruckleitung mit der pneumatischen Bremsanlage nach der Lufttrocknungseinheit verbunden ist. Hierdurch kann ein Druckniveau in der pneumatischen Bremsanlage als Zustandskriterium für eine Aktivierung einer Reifenfüllung herangezogen werden.

Bevorzugt ist das Wechselventil durch Bedienereingabe in einen Schaltzustand versetzbar, in dem der Druckregler mit einem Druckzustand in der pneumatischen Bremsanlage zur Schaltung in die Arbeitsstellung beaufschlagt wird. Hierdurch werden durch eine Bedienperson der Arbeitsmaschine beinflussbare Mittel zur Verfügung gestellt, über die sie eine Aktivierung einer Reifenfüllung vornehmen kann.

Eine erfindungsgemäße Reifenfüllvorrichtung wird anhand der nachfolgenden Figur beschrieben.

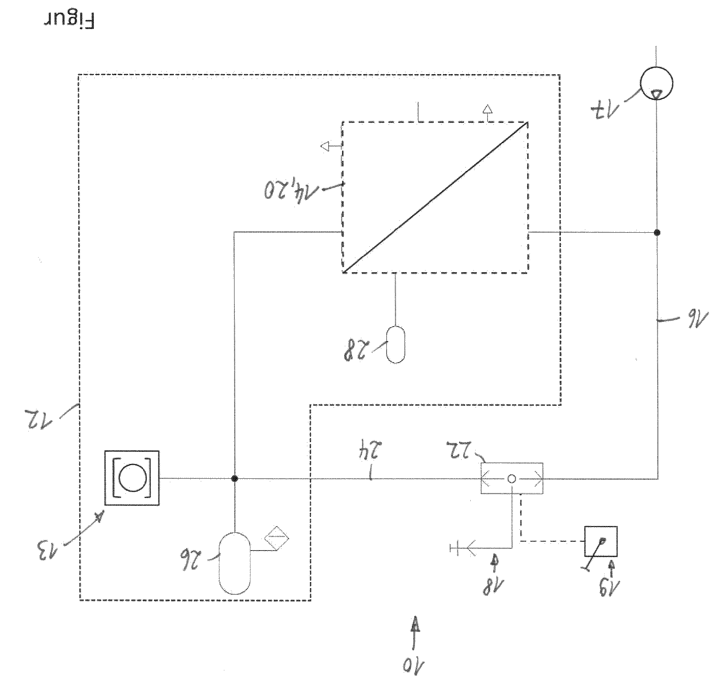

Die Figur zeigt eine erfindungsgemäße Reifenfüllvorrichtung 10, eine pneumatische Bremsanlage 12 mit einer Lufttrocknungseinheit 14, die beide über eine druckführende Kompressorleitung 16 von einen Kompressor 17 mit Druckluft versorgt werden können und die in eine nicht näher dargestellte landwirtschaftliche Arbeitsmaschine in Gestalt eines Traktors eingebaut sein können. Die pneumatische Bremsanlage 12 verfügt über zumindest eine Radbremseinheit 13, die durch Beaufschlagung mit Druckluft ein Bremsmoment auf ein Rad des Traktors übertragen kann.

Die Lufttrocknungseinheit 14 umfasst einen Druckregler 20. In der druckführenden Kompressorleitung 16 ist ein zwischen einer ersten und einer zweiten Position schaltbares Wechselventil 22 angeordnet. Von dem Wechselventil zweigt ein Reifenfüllanschluss 18 und eine Vorsteuerdruckleitung 24 ab. Der Reifenfüllanschluss 18 kann in nicht dargestellter Weise mit einem Rad des Traktors verbunden werden, um das Rad mittels der bereitgestellten Druckluft mit einer Luftfüllung zu versorgen. Die Vorsteuerdruckleitung 24 verbindet das Wechselventil 22 mit der pneumatische Bremsanlage 12 und zwar in einem Punkt, der, bezogen auf eine durch den Druckluftkompressor vorgegebene Förderrichtung, hinter der Lufttrocknungseinheit 14 liegt. In diesem Sinne ebenfalls hinter der Lufttrocknungseinheit 14 umfasst die pneumatische Bremsanlage 12 einen Druckspeicher 26. Ferner ist der Lufttrocknungseinheit 14 noch ein Regenerationsbehältnis 28 zugeordnet. Optional können Bedienmittel 19 vorgesehen sein, welche von einer Bedienperson des Traktors betätigt werden können, um das schaltbare Wechselventil zwischen den beiden Positionen zu schalten.

Die Funktionsweise der erfindungsgemäße Reifenfüllvorrichtung 10 und der pneumatische Bremsanlage 12 mit einer Lufttrocknungseinheit 14 ist folgendermaßen: Zunächst wird mittels des Kompressors 17 die pneumatische Bremsanlage 12 bis zu einem Abschaltdruck mit Druckluft versorgt, die in dem Druckspeicher 26 gespeichert wird. Währenddessen durchströmt die komprimierte Luft die Lufttrocknungseinheit 14 zwecks Trocknung. Nach Erreichen des Abschaltdrucks fällt der Druck in der Kompressorleitung 16 gegenüber einem in der pneumatische Bremsanlage 12 gehaltenen Druck ab. In diesem Zustand befindet sich das Wechselventil 22 in einer ersten Position, in der der Reifenfüllanschluss 18 mit der Vorsteuerdruckleitung 24 kommunizierend verbunden ist, so dass an dem Reifenfüllanschluss 18 und in der Vorsteuerdruckleitung 24 der Druck der pneumatische Bremsanlage 12 herrscht. So lange an dem Reifenfüllanschluss 18 kein aufzufüllendes Rad oder dergleichen angeschlossen ist, stellt er einen Verschluss dar. Wird nun an den Reifenfüllanschluss 18 ein aufzufüllenden Rad angeschlossen, strömt zunächst Druckluft aus dem Druckspeicher 26 beziehungsweise aus der pneumatische Bremsanlage 12 über die Vorsteuerdruckleitung 24 und den Reifenfüllanschluss 18 in das aufzufüllende Rad. Währenddessen fällt der Druck in dem Druckspeicher 26 beziehungsweise der pneumatische Bremsanlage 12 ab, bis er das gleiche Niveau wie in der Kompressorleitung 16 erreicht hat. Wird das in der Kompressorleitung 16 herrschende Druckniveau unterschritten, bewegt sich das Wechselventil 22 in eine zweite Position, in der der Reifenfüllanschluss 18 mit der Kompressorleitung 16 verbunden ist. Infolge des Druckabfalls in dem Druckspeicher 26 beziehungsweise der pneumatischen Bremsanlage 12 schaltet der Druckregler 20 in eine Arbeitsstellung und gleichzeitig läuft der Kompressor 17 erneut an und versorgt einen Reifen über die Kompressorleitung 16 und den Reifenfüllanschluss 18 direkt unter Umgehung der Lufttrocknungseinheit 14 mit nicht getrockneter Druckluft. Nach Beendigung der Reifenfüllung wird die pneumatische Bremsanlage 12 erneut mit getrockneter Druckluft bis zum Abschaltdruck gefüllt, wie zuvor beschrieben.

### Bezugszeichenliste

- 10: Reifenfüllvorrichtung
- 12: pneumatischen Bremsanlage
- 13: Radbremseinheit
- 14: Lufttrocknungseinheit
- 16: Kompressorleitung
- 17: Kompressor
- 18: Reifenfüllanschluss
- 19: Bedienmittel
- 20: Druckregler
- 22: Wechselventil
- 24: Vorsteuerdruckleitung
- 26: Druckspeicher
- 28: Regenerationsbehältnis

## Patentansprüche

1. Reifenfüllvorrichtung (10) für eine landwirtschaftliche Arbeitsmaschine,
mit einer von einer pneumatischen Bremsanlage (12) umfassten Lufttrocknungseinheit (14), die mittels kompressorerzeugter Druckluft betreibbar ist,
wobei in einer druckführenden Kompressorleitung (16) vor der Lufttrocknungseinheit (14) ein Reifenfüllanschluss (18) zur Zuleitung von Druckluft zu einem Reifen der Arbeitsmaschine vorgesehen ist, **dadurch gekennzeichnet,**
**dass** ein Wechselventil (22) vorgesehen ist, das in Abhängigkeit eines Verhältniss der Druckzustände in der druckführenden Kompressorleitung (16) und in der pneumatischen Bremsanlage (12) in eine erste und eine zweite Positon schaltbar ist, wobei in der ersten Position Druckluft aus dem Druckspeicher (26) über eine Vorsteuerdruckleitung (24) und in der zweiten Position Druckluft von dem Kompressor (17) über die Kompressorleitung (16) in den Reifen strömt.

2. Reifenfüllvorrichtung (10) nach Anspruch 1, wobei die Lufttrocknungseinheit (14) einen in eine Arbeitsstellung schaltbaren Druckregler (20) umfasst, wobei in der Arbeitsstellung eine Bereitstellung von Druckluft über die Kompressorleitung (16) durch einen Kompressor (17) erfolgt.

3. Reifenfüllvorrichtung (10) nach Anspruch 2, wobei der Druckregler (20) in Abhängigkeit eines Druckzustandes in der pneumatischen Bremsanlage (12) in die Arbeitsstellung schaltet.

4. Reifenfüllvorrichtung (10) nach Anspruch 3, wobei sich der Druckzustand zur Schaltung des Druckreglers (20) in die Arbeitsstellung aus einem Druckspeicher (26) der pneumatischen Bremsanlage (12) speist.

5. Reifenfüllvorrichtung (10) nach einem der Ansprüche 1 bis 4, wobei das Wechselventil (22) zwischen der druckführenden Kompressorleitung (16) und dem Reifenfüllanschluss (18) angeordnet ist und über eine Vorsteuerdruckleitung (24) mit der pneumatischen Bremsanlage (12) nach der Lufttrocknungseinheit (14) verbunden ist.

6. Reifenfüllvorrichtung (10) nach einem der Ansprüche 1 bis 5, wobei das Wechselventil (22) durch Bedienereingabe in einen Schaltzustand versetzbar ist, in dem der Druckregler (20) in Abhängigkeit eines Druckzustandes in der pneumatischen Bremsanlage (12) zur Schaltung in die Arbeitsstellung steuerbar ist.

## Claims

1. Tyre filling device (10) for an agricultural working machine,
with an air drying unit (14) which is surrounded by a pneumatic braking system (12) and is operable by means of compressor-generated compressed air,
wherein a tyre filling connection (18) to the supply line of compressed air to a tyre of the working machine is provided in a pressure-conducting compressor line (16) upstream of the air drying unit (14), **characterized**
**in that** a shuttle valve (22) is provided, which is switchable into a first and a second position depending on a ratio of the pressure states in the pressure-conducting compressor line (16) and in the pneumatic braking system (12), wherein, in the first position, compressed air flows out of the pressure accumulator (26) via a pilot control pressure line (24) into the tyre and, in the second position, compressed air flows from the compressor (17) via the compressor line (16) into the tyre.

2. Tyre filling device (10) according to Claim 1, wherein the air drying unit (14) comprises a pressure regulator (20) which is switchable into a working position, wherein, in the working position, compressed air is provided by a compressor (17) via the compressor line (16).

3. Tyre filling device (10) according to Claim 2, wherein the pressure regulator (20) switches into the working position depending on a pressure state in the pneumatic braking system (12).

4. Tyre filling device (10) according to Claim 3, wherein the pressure state for switching the pressure regulator (20) into the working position is fed from a pressure accumulator (26) of the pneumatic braking system (12).

5. Tyre filling device (10) according to one of Claims 1 to 4, wherein the shuttle valve (22) is arranged between the pressure-conducting compressor line (16) and the tyre filling connection (18) and is connected via a pilot control pressure line (24) to the pneumatic braking system (12) downstream of the air drying unit (14).

6. Tyre filling device (10) according to one of Claims 1 to 5, wherein the shuttle valve (22) can be set by operator input into a switching state in which the pressure regulator (20) is controllable for switching into the operating position depending on a pressure state in the pneumatic braking system (12).

## Revendications

1. Dispositif de gonflage de pneumatique (10) pour une machine de travail agricole, comprenant une unité de séchage d'air (14) incluse dans une installation de freinage pneumatique (12), qui peut fonctionner au moyen d'air comprimé généré par un compresseur, un raccord de gonflage de pneumatique (18) étant prévu, dans une conduite de compresseur acheminant la pression (16) avant l'unité de séchage d'air (14), pour conduire l'air comprimé à un pneumatique de la machine de travail, **caractérisé en ce qu'**il est prévu une soupape d'échange (22) qui peut être commutée dans une première et une deuxième position en fonction d'un rapport des états de pression dans la conduite de compresseur acheminant la pression (16) et dans l'installation de freinage pneumatique (12), l'air comprimé, dans la première position, sortant de l'accumulateur de pression (26) par le biais d'une conduite de pression pilote (24), et l'air comprimé, dans la deuxième position, entrant depuis le compresseur (17) par le biais de la conduite de compresseur (16) dans le pneumatique.

2. Dispositif de gonflage de pneumatique (10) selon la revendication 1, dans lequel l'unité de séchage d'air (14) comprend un régulateur de pression (20) pouvant être commuté dans une position de travail, de l'air comprimé étant fourni, dans la position de travail, par un compresseur (17) par le biais de la conduite de compresseur (16).

3. Dispositif de gonflage de pneumatique (10) selon la revendication 2, dans lequel le régulateur de pression (20) commute dans la position de travail en fonction d'un état de pression dans l'installation de freinage pneumatique (12).

4. Dispositif de gonflage de pneumatique (10) selon la revendication 3, dans lequel l'état de pression pour commuter le régulateur de pression (20) dans la position de travail s'obtient à partir d'un accumulateur de pression (26) de l'installation de freinage pneumatique (12).

5. Dispositif de gonflage de pneumatique (10) selon l'une quelconque des revendications 1 à 4, dans lequel la soupape d'échange (22) est disposée entre la conduite de compresseur acheminant la pression (16) et le raccord de gonflage de pneumatique (18), et est connectée par le biais d'une conduite de pression pilote (24) à l'installation de freinage pneumatique (12) après l'unité de séchage d'air (14).

6. Dispositif de gonflage de pneumatique (10) selon l'une quelconque des revendications 1 à 5, dans lequel la soupape d'échange (22) peut être amenée dans un état de commutation par l'action d'un opérateur, par le fait que le régulateur de pression (20) peut être commandé en fonction d'un état de pression dans l'installation de freinage pneumatique (12) pour la commutation dans la position de travail.
